# EUROPEAN PATENT SPECIFICATION

(11) **EP 0 599 328 B1**
(45) Date of publication and mention of the grant of the patent: **30.07.1997**
(21) Application number: 93119052.4
(22) Date of filing: 25.11.1993
(51) Int. Cl.: F16D 23/14

(54) **Clutch release bearing device**
Kupplungsausrücklager
Butée d'embrayage

(30) Priority: 27.11.1992 JP 318107/92
(43) Date of publication of application: 01.06.1994
(73) Proprietor: AISIN SEIKI KABUSHIKI KAISHA, Kariya City Aichi Pref. (JP)
(72) Inventor: Fukaya, Nobuki, Takahama city, Aichi Pref. (JP)
(74) Representative: Tiedtke, Harro, Dipl.-Ing.

(56) References cited:
- EP-A- 0 192 081
- FR-A- 2 518 678
- JP-A- 6 237 522
- US-A- 5 014 840

## Description

This invention relates to a clutch release bearing device according to the preamble of claim 1, said device being mainly used for a power train of a vehicle.

A conventional clutch release bearing device is disclosed in the document JP-A-62/37522. This clutch release bearing device comprises a first member connected with a clutch release fork through a bearing mechanism and a second member which retains a clutch spring. The first member and the second member can engage and disengage each other. A wall portion of the first member engages with a shoulder portion of the second member through a detent member. When the detent member is expanded in a groove of the second member by a stroke of a sleeve member, the first member is disengaged from the second member.

However in accordance with this prior art the first member must be moved in the left direction in the figures attached to this document in order to expand the detent member. Therefore when the first member and the second member are disengaged each other, the first member is requested to move in the reciprocally horizontal direction. Consequently the clutch release bearing device is incovenient for its assembly.

Further, the clutch release bearing device comprises a clearance in the axial direction between the first member and the second member. Therefore the first member must be always pulled toward the right direction by the clutch release fork. In addition, the first member and the second member are engaged each other by the two points through the detent member. Therefore, each of the first member and the second member needs the durability.

Furthermore, the clutch release bearing device needs a precise size of an outside diameter of the sleeve member in order to certainly disengage the first member from the second member.

It is the object of the present invention to provide an improved clutch release bearing device which is convenient for its manufacture and assembly, is simple in structure and small in size, comprises durability, has a minimized clearance between the first member and the second member, and can certainly engage and disengage the first member with the second member.

This object is achieved by the combination of the features defined in claim 1. Preferable embodiments of the invention are defined in the subclaims.

The features and advantages of the clutch release bearing device according to the present invention will be more clearly appreciated from the following description in conjunction with the accompanying drawings wherein:
FIG. 1 is a sectional view of a clutch release bearing device of the present invention;
FIG. 2 is a sectional view of a clutch release bearing device of the present invention taken on line 2-2 of Fig. 1;
FIG. 3 is a sectional view of a clutch release bearing device in explaining the mounting operation of the invention;
FIG. 4 is a sectional view of a clutch release bearing device in explaining the mounting operation of the invention; and
FIG. 5 is a sectional view of a clutch release bearing device in explaining the mounting operation of the invention.

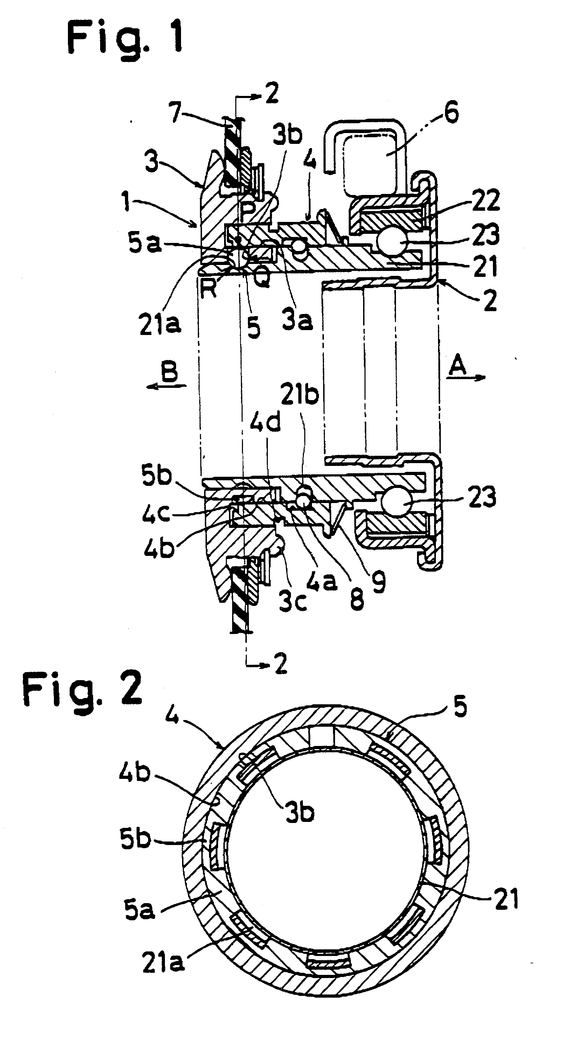

Referring to FIG. 1 a clutch release bearing device 1 comprises a first member 2, a second member 3, a sleeve member 4 and a detent member 5. The first member 2 includes an inner race 21 which is axially slidably mounted on an input shaft of a transmission (not shown in the FIGURES). The first member 2 further includes an outer race 22 which is formed in the cylindrical shaped configuration. The outer race 22 is connected with a clutch release fork 6 which is connected with a clutch release cylinder (not shown in the FIGURES). The outer race 22 can be rotated relative to the inner race 21 through a plurality of balls 23 as rolling elements of the bearing mechanism which are disposed between the inner race and the outer race. A groove portion 21a for engaging with a detent member 5 (described later) is disposed on an outer circumference of the inner race 21.

The second member 3 is formed in the cylindrical shaped configuration and mounted on the outer circumference of the inner race 21. A diaphragm spring 7 as a clutch spring of a clutch mechanism (not shown in the FIGURES) is supported on the outer circumference of the second member 3. The second member 3 has a first slot 3a for engaging with the sleeve member 4 (described later) and a second slot 3b for engaging with the detent member 5 (described later) . A projecting portion 3c for functioning as a fulcrum portion of an operation of a tool 10 (described later) is formed on a side portion of the second member 3.

The sleeve member 4 is formed in the cylindrical shaped configuration and axially slidably disposed on the outer circumference of the inner race 21. The sleeve member 4 includes a first groove 4a and the inner race 21 has a groove 21b. The sleeve member 4 is slidably supported on an outer circumference of the inner race 21 through a ring 8 which is disposed in the first groove 4a and the groove 21b so as not to detach the sleeve member 4 from the inner race 21. The sleeve member 4 can be inserted into the first slot 3a. The sleeve member 4 has a restrict portion 4b for contacting with the detent member 5 and a cut portion 4c into which the detent member 5 can expand. Furthermore, a second groove 4d for engaging with the tool 10 is disposed on an outer circumference of the sleeve member 4.

The detent member 5 has mainly a circular shaped configuration 5a in section and is formed in the incomplete ring shaped configuration with a cut portion on the circumference. The detent member 5 includes a plurality of sectional semicircular portions 5b each of which is formed by cutting out the rest semicircular portion. The detent member 5 is supported in the second slot 3b so as to be expanded and further engaged with the groove portion 21a. Furthermore, the detent member 5 is contacted with the restrict portion 4b of the sleeve member 4. The second slot 3b comprises a plurality of through portions in the radial direction of the second member 3 so as to engage with the circular portions 5a. The second slot 3b further includes a plurality of unthrough portions for engaging with the semicircular portions 5b.

A dish spring 9 is disposed between the inner race 21 and the sleeve member 4. The sleeve member 4 is always biassed by the dish spring 9 in a direction shown as an arrow B (indicates the direction which the first member 2 is engaged with the second member 3) in the FIG. 1 so as to contact the restrict portion 4b with the detent member 5.

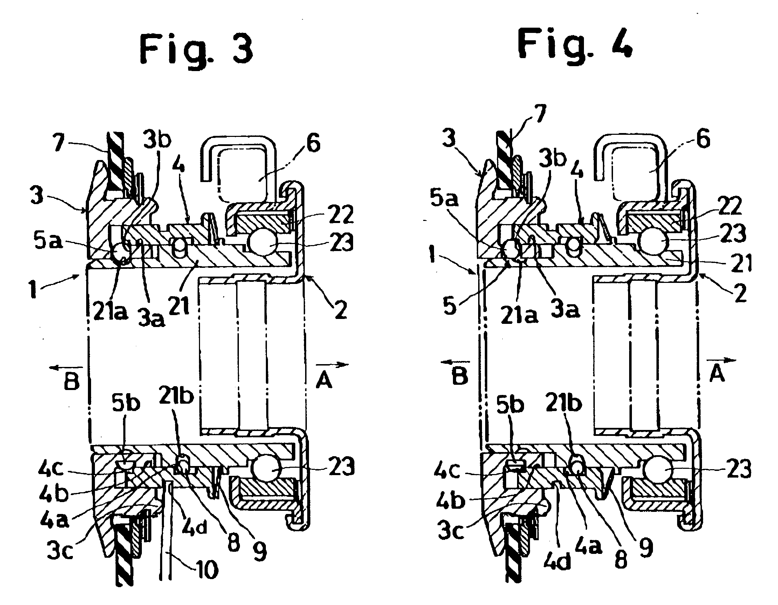

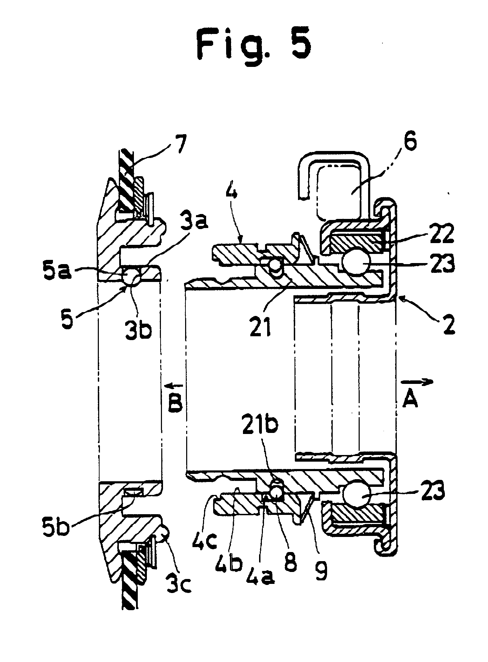

A mounting operation of the clutch bearing device 1 will be described hereinafter. In the FIG. 1 a condition of the clutch release bearing device 1 which is assembled is shown. In order to disengage the first member 2 from the second member 3, the tool 10 is fit into the second groove 4d et the end thereof and the sleeve member 4 is slid in a direction shown as an arrow A (indicates the direction which the first member 2 is disengaged from the second member 3) against the elastic force of the dish spring 9 by rotating the tool 10 in the clockwise direction in FIG. 3 in such a manner that the projecting portion 3c acts as a fulcrum portion. Therefore the restrict portion 4b of the sleeve member 4 is disengaged from the detent member 5 and the detent member 5 is opposite to the cut portion 4c of the sleeve member 4. At this time, because the first member 2 is also slid in the arrow A direction in FIG. 3 through the dish spring 9, the circular portions 5a are disengaged from the groove portion 21a and the detent member 5 is expanded into the cut portion 4c by the outer circumference of the inner race 21. Therefore the first member 2 is completely disengaged from the second member 3 shown in FIG. 5 by the further slide movement of the first member 2. As shown in FIG. 5, when the first member 2 and the second member 3 are completely disengaged, the sleeve member 4 and the dish spring 9 are continued to be mounted on the first member 2 and the detent member 5 is supported on the second member 3.

When the first member 2 and the second member 3 which are shown in FIG. 5 are assembled, the first member 2 is slid in the arrow B direction so as to insert the inner race 21 into the inner circumference and fit the sleeve member 4 into the first slot 3a. Therefore the detent member 5 is expanded by the outer circumference of the inner race 21 and the circular portions 5a of the detent member 5 engage with the groove portion 21a. Consequently, the detent member 5 is opposite to the restrict portion 4b. Further the inner race 21 includes an inclination at the left thereof so as that the detent member 5 easily goes up the outer circumference of the inner race 21. Consequently, the inner race 21 of the first member 2 engages with the second member 3 through the detent member 5 as shown in FIG. 1.

When the clutch release fork 6 is moved in the arrow A direction by the clutch operation in the FIG. 1, the inner race 21 is also slid in the arrow A direction. At this time, the sleeve member 4 is not moved relative to the inner race 21 because of the elastic force of the dish spring 9. Therefore the detent member 5 is opposite to the restrict portion 4b and the restrict portion 4b prevents the detent member 5 from expanding. As a result, the detent member 5 does not disengage from the groove portion 21a. Consequently the second member 3 is slid in the arrow A direction through the inner race 21, the sleeve member 4 and the detent member 5. Therefore an inner circumference portion of the diaphragm spring 7 is also biassed in the arrow A direction and the clutch mechanism is under the release condition. As a result, the first member 2 and the second member 3 are not disengaged when the clutch release fork 6 is moved by the clutch operation.

In accordance with the above mentioned structure, because the clutch release bearing device 1 of the invention can be disassembled into the first member 2 and the second member 3, the clutch release bearing device 1 is convenient for the mounting operation of the transmission and the clutch mechanism. Further, when the first member 2 and the second member 3 are disengaged, the sleeve member 4 may be slid merely in the arrow A direction without slid in the arrow B direction. Moreover, since the sleeve member 4 is moved by the tool 10, the first member 2 and the second member 3 are completely disengaged. Furthermore, the sleeve member 4 does not need the precise size in relation to the detent member 5 and the sleeve member 4 and the detent member 5 are easily manufactured.

Moreover, when the clutch release bearing device 1 is assembled, the detent member 5 is retained with three points indicated as arrows P, Q and R shown in FIG. 1. Each of the arrows P, Q and R indicates respectively the radial force operated from the sleeve member 4, the axial force operated from the second member 3 and the oblique force to the axial direction operated from the first member 2. Therefore the clutch release bearing device 1 of the invention can decrease the stress which is generated between the detent member 5 and each of the sleeve member 4, the second member 3 and the first member 2. Consequently, the above elements do not have to have the strength.

Furthermore in accordance with the structure of the invention, when the clutch release bearing device 1 is assembled, the clutch release bearing device 1 does not comprise a clearance between the first member 2 and the second member 3 in the axial direction (shown as the arrow A and the arrow B of the FIG.1). Therefore the first member 2 does not have to be pulled in the arrow A direction of the FIG. 1 by the clutch release fork 6.

While the invention has been particularly shown and described with reference to preferred embodiment thereof, it will be understood by those skilled in the art that the foregoing and other changes in form and details can be made therein without departing from the scope of the invention as defined in the appended claims.

A clutch release bearing device includes a first member for connected with a clutch release fork and which includes a bearing mechanism, a second member slidably disposed on the first member and for which retains a clutch spring, a sleeve member which is mounted on the first member and a detent member which engages the first member and the second member, wherein the first member includes a groove portion, the sleeve member includes a restrict portion and the detent member is engaged with the groove portion and contacted with the restrict portion.

## Claims

1. A clutch release bearing device comprising:
a first member (2) connected with a clutch release fork (6), said first member including a bearing mechanism (21-23);
a second member (3) slidably disposed on the first member, said second member retaining a clutch spring (7);
a sleeve member (4) slidably supported on the first member; and
a detent member (5) engaging said first member and said second member,
**characterized in that**
said first member (2) includes a groove portion (21a), said sleeve member (4) includes a restricting portion (4b) and the detent member (5) fits in a slot (3b) radially extending in said second member (3), wherein said sleeve member (4) can be slid over said slot (3b) to have its restricting portion (4b) opposite to and in contact with said detent member (5), so that said detent member (5) is engaged with the groove portion (21a) and contacted with the restricting portion (4b).

2. A clutch release bearing device according to claim 1, wherein the sleeve member (4) further includes a cut portion (4c).

3. A clutch release bearing device according to claim 1,
characterized by
a spring member (9) disposed between said sleeve member (4) and said first member (2), wherein said spring member biasses the sleeve member toward said second member (3).

4. A clutch release bearing device according to claim 1, wherein said detent member (5) includes a semicircular portion (5b) and said second member (3) engages with said semicircular portion so as to locate the detent member circumferentially.

5. A clutch release bearing device according to claim 1, wherein said sleeve member (4) engages into a further slot (3a) of said second member (3), wherein an outer circumference of said detent member (5) contacts with the restricting portion (4b) of said sleeve member, and said sleeve member also engages with said first member (2) through a ring (8).

## Patentansprüche

1. Kupplungsausrücklager mit:
einem mit einer Kupplungsausrückgabel (6) verbundenen ersten Element (2), wobei das erste Element einen Lagermechanismus (21-23) umfaßt;
einem auf dem ersten Element gleitfähig angeordneten zweiten Element (3), wobei das zweite Element eine Kupplungsfeder (7) hält;
einem auf dem ersten Element gleitfähig gestützten Hülsenelement (4); und
einem Auslöseelement (5), das sich im Eingriff mit dem ersten Element und dem zweiten Element befindet,
**dadurch gekennzeichnet, daß**
das erste Element (2) einen Nutabschnitt (21a) umfaßt, wobei das Hülsenelement (4) einen begrenzenden Abschnitt (4b) umfaßt und das Auslöseelement (5) in einen Schlitz (3b) eingepaßt ist, der sich in dem zweiten Element (3) radial erstreckt, wobei das Hülsenelement (4) über den Schlitz (3b) verschoben werden kann, um den begrenzenden Abschnitt (4b) gegenüber und im Kontakt mit dem Auslöseelement (5) zu bringen, so daß das Auslöseelement (5) sich im Eingriff mit dem Nutabschnitt (21a) und im Kontakt mit dem begrenzenden Abschnitt (4b) befindet.

2. Kupplungsausrücklager nach Anspruch 1, wobei das Hülsenelement (4) des weiteren einen Ausnehmungsabschnitt (4c) umfaßt.

3. Kupplungsausrücklager nach Anspruch 1,
**gekennzeichnet durch**
ein zwischen dem Hülsenelement (4) und dem ersten Element (2) angeordnetes Federelement (9), wobei das Federelement das Hülsenelement gegen das zweite Element (3) vorspannt.

4. Kupplungsausrücklager nach Anspruch 1, wobei das Auslöseelement (5) einen Kreisausschnitt (5b) umfaßt und das zweite Element (3) sich so im Eingriff mit dem Kreisausschnitt befindet, daß das Auslöseelement in der Umfangsrichtung angeordnet wird.

5. Kupplungsausrücklager nach Anspruch 1, wobei sich das Hülsenelement (4) im Eingriff mit einem weiteren Schlitz (3a) des zweiten Elements (3) befindet, wobei sich ein äußerer Umfang des Auslöseelements (5) im Kontakt mit dem begrenzenden Abschnitt (4b) des Hülsenelements befindet, und wobei sich das Hülsenelement durch einen Ring (8) auch im Eingriff mit dem ersten Element (2) befindet.

## Revendications

1. Un dispositif de butée d'embrayage comportant :
un premier élément (2) connecté à un dispositif de débrayage (6), ledit premier élément comportant un mécanisme de palier (21-23) ;
un second élément (3) disposé en glissement sur le premier élément, ledit second élément maintenant un ressort d'embrayage (7);
un élément de manchon (4) supporté en glissement sur le premier élément ; et
un élément positionneur (5) engageant ledit premier élément et ledit second élément,
caractérisé en ce que
ledit premier élément (2) comporte une partie de rainure (21a), ledit élément de manchon (4) comporte une partie de limitation (4b) et l'élément positionneur (5) s'ajuste dans une fente (3b) s'étendant de façon radiale dans ledit second élément (3), dans lequel ledit élément de manchon (4) peut glisser sur ladite fente (3b) pour avoir sa partie de limitation (4b) opposée, à et en contact avec, ledit élément positionneur (5), de manière à ce que ledit élément positionneur (5) soit en prise avec la partie de rainure (21a) et en contact avec la partie de limitation (4b).

2. Un dispositif de butée d'embrayage selon la revendication 1, dans lequel l'élément de manchon (4) comporte en outre une partie découpée (4c).

3. Un dispositif de butée d'embrayage selon la revendication 1,
caractérisé en ce que
un élément de ressort (9) disposé entre ledit élément de manchon (4) et ledit premier élément (2), dans lequel ledit élément de ressort force l'élément de manchon vers ledit second élément (3).

4. Un dispositif de butée d'embrayage selon la revendication 1, dans lequel ledit élément positionneur (5) comporte une partie semi-circulaire (5b) et ledit second élément (3) est en prise avec ladite partie semi-circulaire de manière à situer l'élément positionneur sur la circonférence.

5. Un dispositif de butée d'embrayage selon la revendication 1, dans lequel l'élément de manchon (4) est engagé dans une autre fente (3a) dudit second élément (3), dans lequel une circonférence extérieure dudit élément positionneur (5) est en contact avec la partie de limitation (4b) dudit élément de manchon, et ledit élément de manchon est aussi en prise avec ledit premier élément (2) au travers d'un anneau (8).
